# EUROPEAN PATENT APPLICATION

(11) **EP 1 462 373 A1**
(43) Date of publication of application: **29.09.2004**
(21) Application number: 04005685.5
(22) Date of filing: 10.03.2004
(51) Int. Cl.: B65B 61/18

(54) **Unit for fixing tear strips on packaging film**

(30) Priority: 25.03.2003 IT BO20030167
(71) Applicant: S.P.R. S.R.L., 40129 BOLOGNA (IT)
(72) Inventor: Zagnoni, Giovanni, 40010 Calcara di Crespellano (Bologna) (IT)
(74) Representative: Modiano, Guido, Dr.-Ing.

(57) **Abstract**

A unit for fixing tear strips on packaging film (2), comprising a line (3) for the advancement of the film (2) along which a plurality of fixed rollers (4) and movable rollers (5) are provided that are actuated in contrast with elastic means (6) that are suitable to compensate for temporary pauses in the advancement of the film (2), in contact with an elongated abutment pad (27); at least one line for dispensing strip portions; a star-shaped assembly (10) of thermal bonding elements (11), each constituted by an elongated plate (14) crossed by a row of holes (18) connected to a suction duct (16), being actuated so that it can rotate in a stepwise fashion in order to move the individual elements (11) from a configuration (A) for connection to suction and for gripping the strip portion to a configuration (B) for contact and thermal bonding of the strip portion against the held film (2), which adheres to the pad (27) and is aligned therewith, and a configuration for disconnection from suction.

## Description

The present invention relates to a unit for fixing tear strips on packaging film.

In order to facilitate the opening of packages of various types of product, it is known to fix tear strips to the sheets of packaging material; by acting on such strips, the package tears at the strip; such strips are drawn from reels and are fixed by thermal bonding to the packaging films. In automatic packaging machines, the wrapping sheets (generally made of a film of a material such as plastics or paper) are drawn continuously from reels. The strips also are drawn from reels: the mutual motion of the strips and of the wrapping sheets determines the type of operation.

The apparatus that deposits the strip is arranged between a station for dispensing the sheet from a reel and an automatic packaging machine, which pulls the sheet at constant speed.

In the past, the strips were fixed transversely to the unwinding direction of the films; due to the rather high unwinding speed of the sheets, considerable problems arose in relation to the fact that thermal bonding of the strip was performed on a sheet that was moving at right angles to the direction of thermal bonding. For this reason, these strip fixing units are rather slow and are subject to frequent poor deposition of the strip on the film.

More recently, a strip depositing unit has been adopted which is provided with a horizontal thermal bonding element that is arranged at right angles to the sheet unwinding direction and is provided with holes that lead to a suction circuit and are designed to keep the strip motionless.

Such element is preceded by a strip cutting element and can move along a vertical plane with a predefined stroke, the upper limit of which is the condition in which the strip is tangent to the packaging film. The film advances on free rollers that are elastically coupled to the supporting structure of the unit, so that during thermal bonding of the strip, when the film is blocked for a short instant, the automatic packaging machine that draws the sheet at constant speed can draw the sheet that has accumulated between the free rollers without having any effect on strip deposition.

The vertical stroke of the thermal bonding element limits the speed of the process: for low advancement speeds of the packaging film, the stroke is performed at a low speed, but when advancement is increased in speed (and it has very large margins for increase), the speed with which the vertical stroke is covered reaches the limit value even for small increments.

The aim of the present invention is to obviate the above-cited drawbacks and meet the mentioned requirements, by providing a unit for fixing tear strips on packaging film that is suitable to be associated with packaging machines that operate at high advancement speeds of the packaging film.

Within this aim, an object of the present invention is to provide a unit that is simple, relatively easy to provide in practice, safe in use, effective in operation, and has a relatively low cost.

This aim and this and other objects that will become better apparent hereinafter are achieved by the present unit for fixing tear strips on packaging film, which comprises a line for the advancement of said film along which a plurality of fixed and movable rollers are provided that are actuated in contrast with elastic means that are suitable to compensate for temporary pauses in the advancement of the film, in contact with an elongated abutment pad, and at least one line for dispensing strip portions, characterized in that it comprises a star-shaped assembly of thermal bonding elements, each of which is constituted by an elongated plate that is crossed by a row of holes that are connected to a suction duct, said star-shaped assembly being actuated so that it can rotate in a stepwise fashion in order to move the individual elements from a configuration for connection to suction and for gripping the strip portion to a configuration for contact and thermal bonding of the strip portion against the held film, which adheres to the pad and is aligned therewith, and a configuration for disconnection from suction.

Further characteristics and advantages of the present invention will become better apparent from the following detailed description of a preferred but not exclusive embodiment of a unit for fixing tear strips on packaging film, illustrated by way of non-limiting example in the accompanying drawings, wherein:

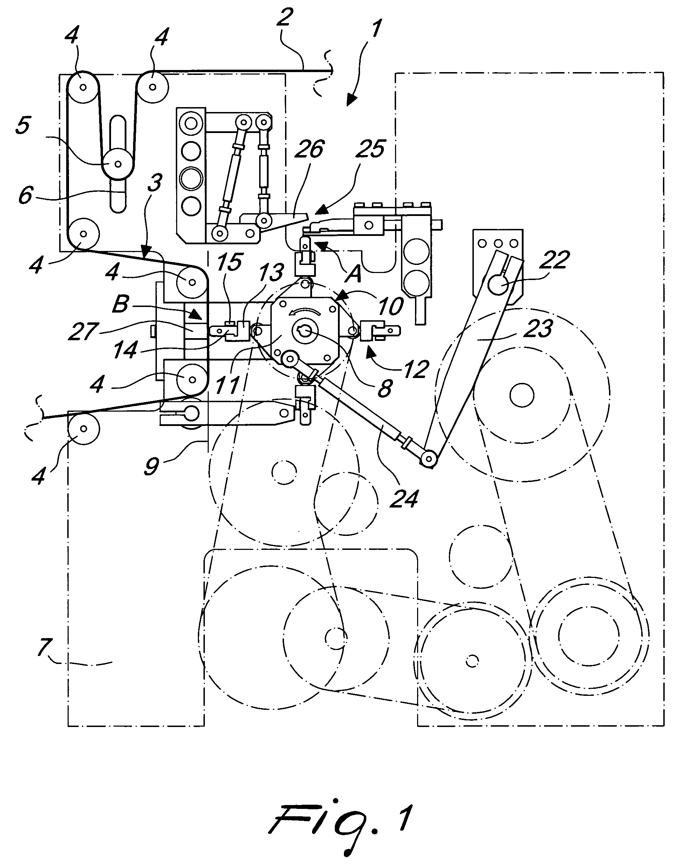

Figure 1 is a side view, with part of the protective housings removed, of a unit for fixing tear strips on packaging film according to the invention;

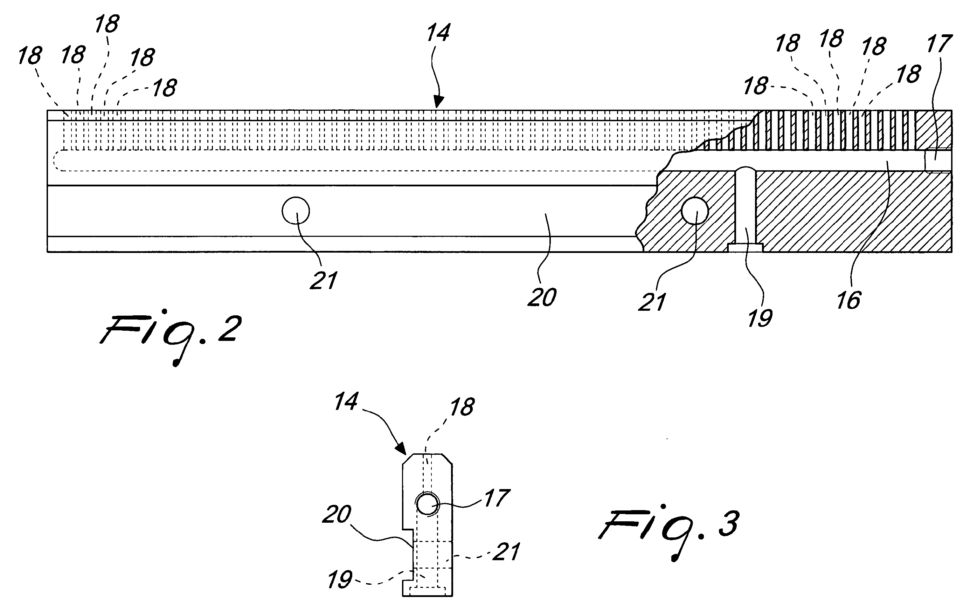

Figure 2 is a front view of a plate of a unit for fixing tear strips on packaging film according to the invention;
Figure 3 is a side view of a plate of a unit for fixing tear strips on packaging film according to the invention.

With reference to the figures, the reference numeral 1 generally designates a unit for fixing tear strips, not shown in the figures, on packaging film 2.

The film 2 arrives from a distribution station, in which it is stored in a reel, and is conveyed to the inlet of the unit 1 along an advancement line 3; the film 2 is kept correctly tensioned by a plurality of fixed rollers 4 and by a movable roller 5, which is actuated in contrast with elastic means within a preset stroke 6, which is suitable to constitute a region for accumulation of the film 2 in order to compensate for temporary stops of the advancement of the film 2 due to the processes to which it is subjected by the unit 1.

Reels of polymeric strip (generally of the thermoplastic type) are accommodated within a housing 7 of the unit 1; said strip is distributed along a dispensing line that comprises a plurality of free pulleys that have a fixed axis and a plurality of pulleys that are mounted so as to rotate freely on an oscillating rod that is actuated in contrast with elastic means, in order to keep the strip wound in a zigzag pattern, compensating for temporary stops of the advancement of said strip due to the processes performed by the unit 1.

A star-shaped assembly 10 is mounted in the central portion of the unit 1 so that it can rotate on a shaft 8 that has a horizontal axis and lies on a plane that is parallel to a plane 9 that contains the film in the same central region of the unit 1.

The star-shaped assembly 10 is constituted by a support 11 that is rigidly coupled to the shaft 8 and on which four heat-sealing elements 12, which are mutually separated by a right angle, are fixed radially.

Each element 12 is provided with a support 13 that is fixed to the support 11 and is provided with heating elements, such as for example electric resistors, and a plate 14 that is detachably coupled to the support 13 by means of screw couplings 15.

Each plate 14 is substantially an elongated parallelepiped that is crossed longitudinally but not completely by an intake duct 16 in which an inlet 17 is threaded in order to allow its closure by means of a grub screw that is also threaded and is not shown in the figure.

In an upper region, the plate 14 has a plurality of holes 18, which are uniformly distributed and connect the duct 16 to the outside; in a lower region, an intake channel 19 allows access to the duct 16 from the outside.

By means of the channel 19, a suction circuit produces a partial vacuum inside the duct 16, uniformly distributing the suction among all the holes 18.

One of the two lateral surfaces of the plate 14 has a longitudinal slot 20 that is shaped for interlocking coupling in the support 13; two transverse holes 21, arranged in a lower region with respect to the portion that is crossed by the duct 16, allow to fix the plate 14 to the support 13 by means of the screw couplings 15.

The star-shaped assembly 10 is turned about its own axis, with a stepwise actuation, by means of a main motor, to the driving shaft 22 of which an end of a driving arm 23 is pivoted, the opposite end of the arm being pivoted in the first end of a driven arm 24, which in turn has its second end rotatably coupled along the peripheral region of the support 11.

In an upper region with respect to the star-shaped assembly 10, at an area 25 from which the strip arrives, cutting means 26 are provided in order to adapt the strip to the upper surface of the plate 14, when the plate is in the configuration designated by the reference letter A, which will accommodate it until it is subjected to thermal bonding onto the film 2, when the plate is in the configuration designated by the letter B.

An abutment pad 27 is located so that it is aligned with the plate 14 when it is in the configuration B, on the opposite side with respect to the film 2 that lies on the plane 9; said pad is designed to keep the film 2 in contact against the upper surface of the plate 14, on which the strip is retained, during thermal bonding.

The operation of the invention is as follows: by activating the unit 1, the film 2 is conveyed along the advancement line 3; the advancement speed is constant and depends on the packaging machine that is located downstream of the unit 1.

The film 2 is stopped at the configuration B. Since the advancement speed remains constant, it is necessary to use, in order to avoid subjecting the film 2 to tensions that would lead to breakage, the accumulation of film that occurs at the roller 5, which is actuated in contrast with elastic means within a preset stroke 6. The film 2 remains motionless in the configuration B, where it is processed, for a time that is shorter than the time required to produce the advancement of all of the portion thereof that has accumulated between the rollers 4 and the roller 5, and restarts, allowing the roller 5 to again move downward, accumulating new material.

The strip moves along the dispensing line, constituted by the system of pulleys with fixed and movable axes, in order to allow the accumulation of material and accordingly allow pauses of a portion of the material without slowing the dispensing speed. In this manner, the strip reaches the element 12 when it is in the configuration A, where the dispensing line ends, at the upper surface of the plate 14.

When a strip portion is arranged above the plate 14, the cutting elements cut it and the suction circuit produces a partial vacuum within the duct 16, uniformly distributing the suction among all the holes 18 that block the strip portion.

By way of the action of the main motor, which by means of the driving arm 23 and the driven arm 24 turns the star-shaped assembly 10, the element 12 that is in the configuration A is rotated through a right angle to the configuration B (at this point, the element 12 that is adjacent and successive to the one being considered is in the configuration A).

In the configuration B, the film 2 is present and motionless, in contact with the upper surface of the plate 14, on which said strip is retained; the film 2 is kept in contact with the strip by the abutment pad 27.

Since the element 12 is heated by the electric resistors, it ensures that mutual compression, associated with the high temperature, causes the portion of strip to adhere to the film 2 by thermal bonding.

Once adhesion has occurred, the suction circuit is disconnected and the film 2 resumes moving in the direction set by the advancement line, accumulating at the region of the roller 5, which can move along the guide 6.

A new portion of film 2 is held at the configuration B, and the portion of strip locked on the element 12 that is adjacent to the preceding one is deposited thereon, accordingly providing continuous operation of the unit 1.

It has thus been shown that the invention achieves the intended aim and objects.

The invention thus conceived is susceptible of numerous modifications and variations, all of which are within the scope of the appended claims.

All the details may further be replaced with other technically equivalent ones.

In the embodiments cited above, individual characteristics, given in relation to specific examples, may actually be interchanged with other different characteristics that exist in other embodiments.

Moreover, it is noted that anything found to be already known during the patenting process is understood not to be claimed and to be the subject of a disclaimer.

In practice, the materials used, as well as the shapes and dimensions, may be any according to requirements without thereby abandoning the scope of the protection of the appended claims.

The disclosures in Italian Patent Application No. B02003A000167 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A unit for fixing tear strips on packaging film (2), comprising a line (3) for the advancement of said film (2) along which a plurality of fixed rollers (4) and movable rollers (5) are provided that are actuated in contrast with elastic means (6) that are suitable to compensate for temporary pauses in the advancement of the film (2), in contact with an elongated abutment pad (27), and at least one line for dispensing strip portions, **characterized in that** it comprises a star-shaped assembly (10) of thermal bonding elements (11), each of which is constituted by an elongated plate (14) that is crossed by a row of holes (18) that are connected to a suction duct (16), said star-shaped assembly (10) being actuated so that it can rotate in a stepwise fashion in order to move the individual elements (11) from a configuration (A) for connection to suction and for gripping the strip portion to a configuration (B) for contact and thermal bonding of the strip portion against the held film (2), which adheres to the pad (27) and is aligned therewith, and a configuration for disconnection from suction.

2. The unit according to claim 1, **characterized in that** said abutment pad (27) is arranged at right angles to the direction of advancement of said film (2).

3. The unit according to claim 1, **characterized in that** said thermal bonding elements (11) are comprised between means (26) for cutting the strip.

4. The unit according to claim 3, **characterized in that** said cutting means (26) are constituted by two scissor-like blades.

5. The unit according to claim 1, **characterized in that** said lines for dispensing said strip are two and are connected to respective reels of said strip, said strip reaching said thermal bonding elements (11) from different portions of said star-shaped assembly (10) by means of said lines.

6. The unit according to claim 5, **characterized in that** the two lines for dispensing said strip face each other with said star-shaped assembly (10) interposed, a portion that arrives from the first line and a portion that arrives from the second line being deposited alternately on said holes (18) of the elongated plate (14).

7. The unit according to claim 1, **characterized in that** said strip dispensing line comprises a plurality of free pulleys that have a fixed axis and a plurality of pulleys that are mounted freely on an oscillating rod that is actuated in contrast with elastic means, said pulleys being suitable to keep the strip wound in a zigzag fashion, compensating for temporary halting of the advancement of said strip.

8. The unit according to one or more of the preceding claims, **characterized in that** said thermal bonding elements (11) have an electric resistor heater that is suitable to keep them at the temperature required for thermal bonding of the strip onto the film (2).

9. The unit according to one or more of the preceding claims, **characterized in that** said thermal bonding elements (11) are four and are arranged in a cross-like configuration, in which the end provided with grip holes is directed radially outward.
